# EUROPEAN PATENT APPLICATION

(11) **EP 4 815 482 A1**
(43) Date of publication of application: **30.09.2026**
(21) Application number: 26164546.9
(22) Date of filing: 13.03.2026
(51) Int. Cl.: H04N 23/63

(54) **DISPLAY CONTROL APPARATUS, DISPLAY CONTROL METHOD, AND PROGRAM**

(30) Priority: 28.03.2025 JP 2025054710
(71) Applicant: Canon Kabushiki Kaisha, Tokyo 146-8501 (JP)
(72) Inventor: KAWASHIMA, Takumi, Ohta-ku, Tokyo, 146-8501 (JP); MITO, Koji, Ohta-ku, Tokyo, 146-8501 (JP)
(74) Representative: TBK

(57) **Abstract**

A display control apparatus (200) acquires a video from an imaging apparatus, detects any one of a pan operation, a tilt operation, and a zoom operation of the imaging apparatus, determines an opacity of a marker to be superimposed on the video according to a result of the detection; and cause a display device to display the marker that is superimposed on the video at the determined opacity.

## Description

### TECHNICAL FIELD

The present disclosure relates to a display control apparatus that is connected to a camera and displays video captured by a camera, and particularly relates to a display control apparatus suitable for improving the visibility of the video captured by the camera during pan/tilt operation.

### BACKGROUND

In recent years, it has become common for cameras (imaging apparatuses), such as video cameras, to include wireless communication functions and wired connection functions. Additionally, application software (camera control applications) for remotely controlling cameras via wireless or wired networks is widely used.

Functions for remotely controlling a camera include, for example, a function for controlling the PTZ (pan/tilt/zoom) of the camera. Furthermore, functions for assisting in controlling the camera include, for example, a function for superimposing a marker on video captured by the camera. There is a plurality of types of markers, including center markers, aspect markers, and safety zone markers. Among these markers, the aspect marker and the safety zone marker explicitly indicate a specific area within video captured by the camera.

In camera control applications, the PTZ of the camera is controlled while checking video captured by the camera. When the camera is controlled, a mask having high opacity is superimposed on the video captured by the camera, whereby a portion of the video in the pan/tilt direction is obscured, resulting in reduced visibility during a pan/tilt operation.

In this regard, as a conventional technology, there is known a method of changing the opacity of a member superimposed on a video during camera control. For example, Japanese Patent Application Laid-open No. 2013-131904 discloses a technology in which, in a case in which motion of a camera is detected, an opacity of an icon superimposed on a video is reduced (that is, a transmittance is increased).

However, in the conventional technology disclosed in the above patent document, a superimposed member cannot be displayed at an optimal opacity selected from a plurality of opacities according to a camera state.

An object of the present disclosure is to provide a display control apparatus capable of improving visibility of a video captured by a camera according to a control state of the camera.

### SUMMARY

The configuration of the display control apparatus according to the present disclosure is a display control apparatus comprising: an acquisition means (21) configured to acquire a video from an imaging apparatus; a detection means configured to detect any of a pan operation, a tilt operation, and a zoom operation of the imaging apparatus; a determination means (22) configured to determine an opacity of a marker to be superimposed on the video according to a result of the detection; and a control means (25) configured to superimpose the marker on the video at the opacity that has been determined, and cause a display device to display the marker that is superimposed on the video at the determined opacity.

Features of the present disclosure will become apparent from the following description of embodiments with reference to the attached drawings. The following description of embodiments is described by way of example.

The present disclosure in its first aspect provides a display control apparatus as specified in claim 1. Optional features are specified in claims 2 to 10.

The present disclosure in its second aspect provides a display control method as specified in claim 11.

The present disclosure in its third aspect provides a computer program for executing the display control method specified claim 11 as specified in claim 12.

### BRIEF DESCRIPTION OF THE DRAWINGS

FIG. 1 is a system configuration diagram of a video display system according to a first embodiment of the present disclosure.
FIG. 2 is a functional configuration diagram of an imaging apparatus.
FIG. 3 is a functional configuration diagram of a display control apparatus according to the first embodiment.
FIG. 4 is a hardware configuration diagram of the imaging apparatus.
FIG. 5 is a hardware configuration diagram of the display control apparatus.
FIG. 6 is a diagram illustrating an example of a camera control screen.
FIG. 7 is a diagram illustrating an example in which a main video region is displayed on a full screen.
FIG. 8A is a diagram illustrating an example of a camera control screen (marker setting mode) for explaining markers displayed in the main video region (Part 1).
FIG. 8B is a diagram illustrating an example of a camera control screen (marker setting mode) for explaining markers displayed in the main video region (Part 2).
FIG. 8C is a diagram illustrating an example of a camera control screen (marker setting mode) for explaining markers displayed in the main video region (Part 3).
FIG. 8D is a diagram illustrating an example of a camera control screen (marker setting mode) for explaining markers displayed in the main video region (Part 4).
FIG. 9A is a diagram explaining a PTZ operation on the camera control screen (PTZ operation mode) according to the first embodiment (Part 1).
FIG. 9B is a diagram explaining a PTZ operation on the camera control screen (PTZ operation mode) according to the first embodiment (Part 2).
FIG. 10A is a diagram explaining the zoom-in and zoom-out of a subject in the video region (Part 1).
FIG. 10B is a diagram explaining the zoom-in and zoom-out of a subject in the video region (Part 2).
FIG. 10C is a diagram explaining the zoom-in and zoom-out of a subject in the video region (Part 3).
FIG. 11 is a diagram explaining the calculation of a variation amount by a joystick operation.
FIG. 12 is a flowchart showing the process for determining the mask opacity of the marker displayed in the main video region of the camera control application according to the first embodiment.
FIG. 13A is a diagram illustrating a state in which markers are displayed on left and right sides of a main video region when a pan operation is not being performed.
FIG. 13B is a diagram illustrating a state in which markers are displayed on left and right sides of a main video region during a pan operation.
FIG. 13C is a diagram illustrating a state in which markers are displayed on top and bottom of a main video region when a tilt operation is not being performed.
FIG. 13D is a diagram illustrating a state in which markers are displayed on top and bottom of a main video region during a tilt operation.
FIG. 14 is a functional configuration diagram of the display control apparatus according to a second embodiment.
FIG. 15 is a flowchart illustrating the process for determining the mask opacity of the marker displayed in the main video region of the camera control application according to the second embodiment.
FIG. 16A is a diagram explaining correspondence between PTZ operations in a camera control screen (PTZ operation mode) and markers displayed in a video region according to a third embodiment (Part 1).
FIG. 16B is a diagram illustrating correspondence between PTZ operations and markers displayed in a video region on a camera control screen (PTZ operation mode) according to a third embodiment (Part 2).
FIG. 17 is a flowchart illustrating a process for determining a mask opacity of a marker displayed in a main video region of a camera control application according to the third embodiment.

### DESCRIPTION OF THE EMBODIMENTS

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

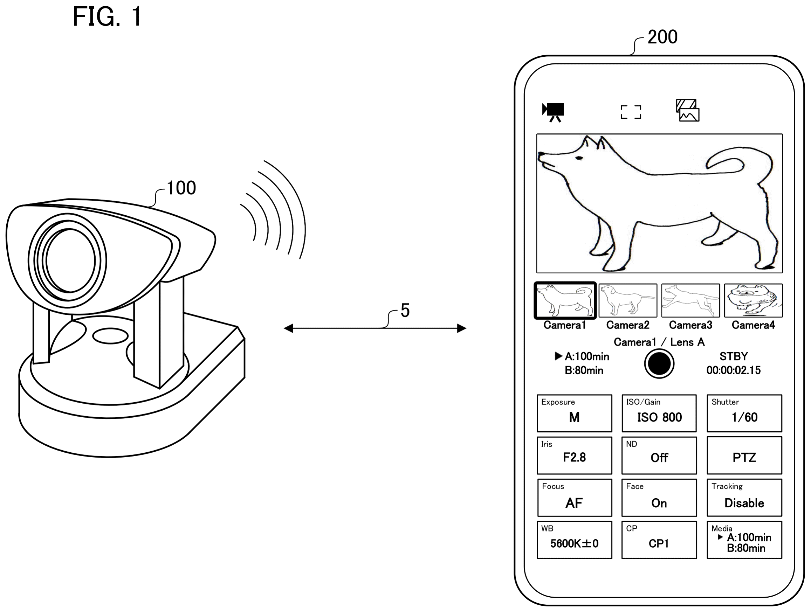

Hereinafter, respective embodiments according to the present disclosure will
be explained with reference to FIG. 1 to FIG. 17.

### [First Embodiment]

Hereinafter, the first embodiment will be explained with reference to FIG. 1 to FIG. 13D.

First, a configuration of a video display system according to a first
embodiment of the present disclosure will be explained with reference to FIG. 1 to FIG. 5.
FIG. 1 is a system configuration diagram of the video display system according to the first embodiment of the present disclosure.

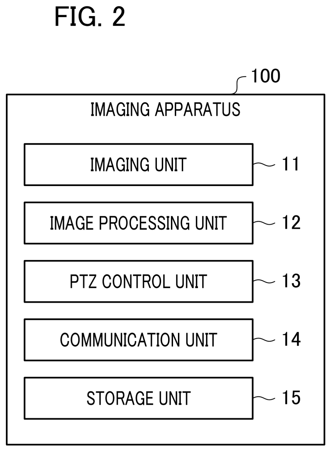

FIG. 2 is a functional configuration diagram of an imaging apparatus.

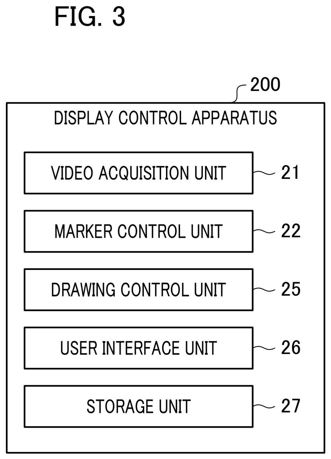

FIG. 3 is a functional configuration diagram of the display control apparatus according to the first embodiment.

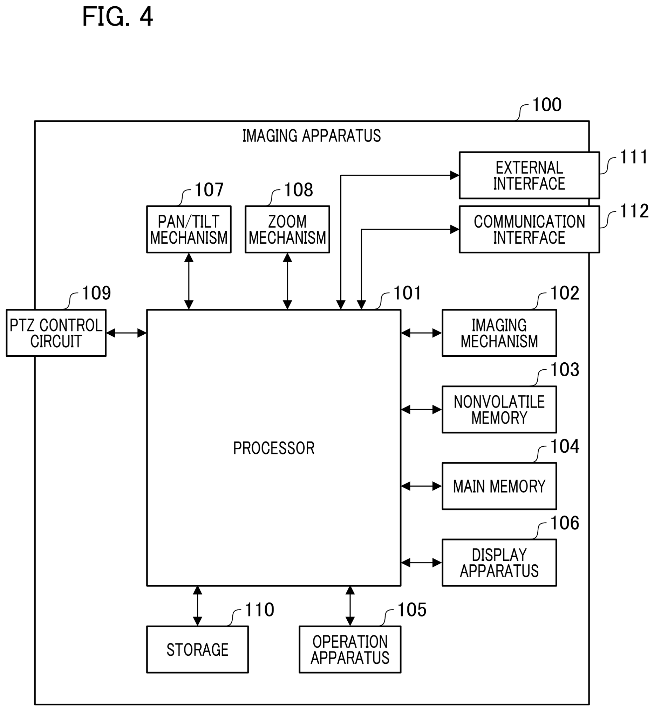

FIG. 4 is a hardware configuration diagram of the imaging apparatus.

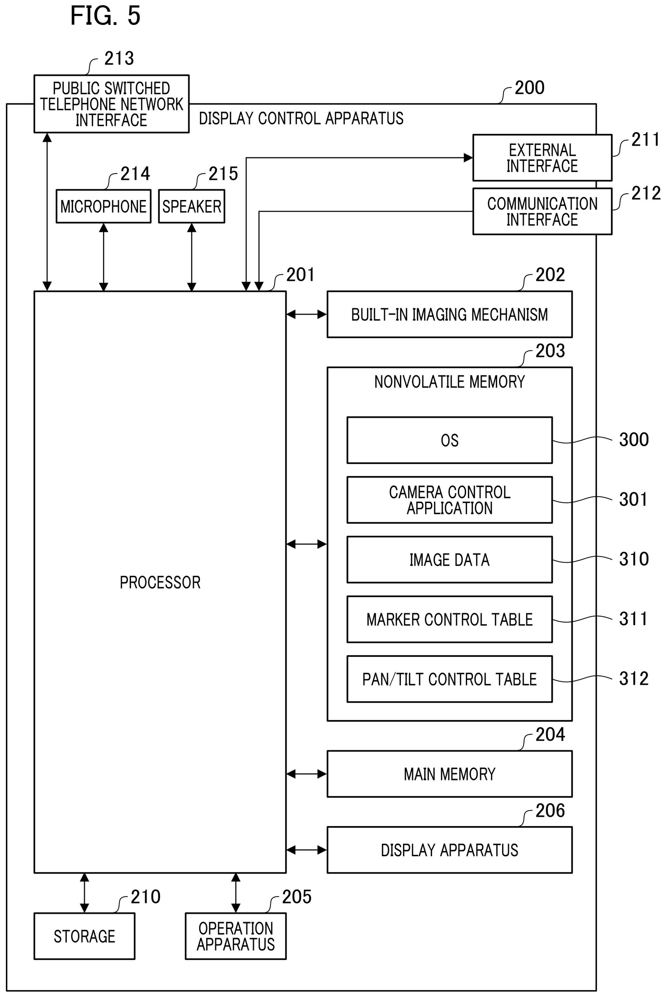

FIG. 5 is a hardware configuration diagram of the display control apparatus.

As shown in FIG. 1, the video display system of the present embodiment is a form in which an imaging apparatus 100 and a display control apparatus 200 are connected via a network 5.

In the present embodiment, the imaging apparatus 100 is assumed to be a camera having a PTZ (Pan/Tilt/Zoom) function. In this context, "pan (panoramic)" refers to a function by which a camera changes its orientation in a horizontal (left-right) direction, and "tilt" refers to a function by which the camera changes its orientation in a vertical (up-down) direction. A camera having a pan function and a tilt function can perform imaging while changing an imaging angle by a user instructing an imaging direction. Additionally, a "zoom" function is a function for changing an imaging angle of view. By a zoom function, when a user instructs enlargement or reduction of an imaging screen, the user can enlarge a subject of interest or perform imaging including surroundings of the subject. Although enlargement and reduction of an imaging screen, in this context, refer to changing an imaging angle of view by performing zoom-in control or zoom-out control of a camera when a user instructs enlargement or reduction of the imaging screen, the present disclosure is not limited thereto. For example, in a case in which a user performs a pinch-in operation or a pinch-out operation on an imaging screen, enlargement or reduction of the imaging screen may be performed, and thereafter an imaging angle of view may be changed by instructing a change of the imaging angle of view of a camera (for example, by pressing an execution button). The imaging apparatus 100 transmits a captured still image or moving image to the display control apparatus 200 via the network 5 at regular intervals or continuously in a case in which the power is ON.

Although, in the present embodiment, the imaging apparatus 100 is assumed to be an independent camera, the imaging apparatus 100 may be a camera provided in a smartphone or a laptop computer or may be in a form such as a web camera connected to a personal computer (PC). Additionally, the imaging apparatus 100 may be a control device for specialized surveillance.

The display control apparatus 200 displays a still image or a moving image based on image data (captured video) transmitted from the imaging apparatus 100, in a form visible to a user. Additionally, a user can control the operation and display of the imaging apparatus 100 via the network 5 by inputting a command or data to the display control apparatus 200. Although, in the present embodiment, the display control apparatus 200 is explained using a smartphone as an example, the present disclosure is not limited thereto, and the display control apparatus may be a general information processing apparatus such as a tablet or a PC.

The network 5 may be wired communication instead of wireless communication. Examples of standards employed for wireless communication include, for example, Wi-Fi (registered trademark) and Bluetooth (registered trademark). Examples of standards employed for wired communication include, for example, serial communication such as RS-232C, RS-422A, or Universal Serial Bus (USB), and may also be Ethernet (registered trademark). Additionally, the network 5 may be a Local Area Network (LAN) or a global network such as the Internet.

Next, detailed configurations of respective components of the video display system will be explained with reference to FIG. 2 and FIG. 3.
As a functional configuration, the imaging apparatus 100 includes an imaging unit 11, an image processing unit 12, a PTZ control unit 13, a communication unit 14, and a storage unit 15, as shown in FIG. 2.

The imaging unit 11 is a functional unit that receives light from a subject through a lens, converts the received light into an electrical signal by an imaging sensor (a CMOS sensor or a CCD sensor), and outputs the electrical signal as digital video data.

The image processing unit 12 is a functional unit that performs noise removal, color correction, and compression processing on video data output from the imaging unit 11, and records or transmits the processed video data in an appropriate format.

The PTZ control unit 13 is a functional unit that controls a drive mechanism for adjusting an orientation of the camera according to a pan operation and a tilt operation, thereby allowing a change of an imaging range. The PTZ control unit 13 performs pan and tilt operations based on PTZ control signals received from the display control apparatus 200. Additionally, the PTZ control unit 13 controls zoom for enlargement and reduction of an image.

The communication unit 14 is a functional unit that connects the imaging apparatus 100 and the display control apparatus 200 via a network, and performs transmission of video data and reception of control signals.

The storage unit 15 is a functional unit that stores programs executed in the imaging apparatus 100, image data acquired by the imaging unit 11, work data for image processing, and control data for PTZ control.

In the present embodiment, the display control apparatus 200 has a role of receiving video from the imaging apparatus 100 and dynamically changing the opacity of a marker according to PTZ operations.

As a functional configuration, the display control apparatus 200 includes a video acquisition unit 21, a marker control unit 22, a drawing control unit 25, a user interface unit 26, and a storage unit 27, as shown in FIG. 3.

The video acquisition unit 21 is a functional unit that receives video data transmitted from the imaging apparatus 100 and stores the video data in a data format processable within the display control apparatus 200. The video acquisition unit 21 has a predetermined frame buffer for performing real-time processing and holds the latest video frame.

The marker control unit 22 is a functional unit that controls display of various types of markers to be displayed on video for confirming a composition of video during imaging, such as an aspect marker, a safety zone marker, and a center marker. Although the marker control unit 22 targets markers such as an aspect marker, a safety zone marker, a center marker, and a grid marker, and determines whether the markers are displayed, display positions, and mask opacity of the markers based on user settings, the present disclosure is not limited thereto. For example, presence or absence of display, display positions, and mask opacity of markers that are preset in the display control apparatus 200 may be adopted.

The drawing control unit 25 is a functional unit that superimposes a marker designated by the marker control unit 22 on video data received from the video acquisition unit 21 and generates final display data. The drawing control unit 25 of the display control apparatus 200 according to the present embodiment includes a function of performing a marker superimposition process on video data (details will be described below).

In the present embodiment, the drawing control unit 25 generates display data in which a marker having an appropriate opacity is superimposed based on user operations acquired by the user interface unit 26, which will be described below.

The user interface unit 26 is a functional unit that provides a function enabling a user to change various settings of the display control apparatus 200. Via the user interface unit 26, a user can adjust types of markers to be displayed, opacity thresholds, and settings for dynamic changes during pan and tilt operations. Additionally, the user interface unit 26 receives pan, tilt, and zoom operations for the imaging apparatus 100, as well as settings and changes of pan, tilt, and zoom.

The storage unit 27 is a functional unit that stores image data of still images or video transmitted from the imaging apparatus 100, PTZ control data, work data for image processing, and setting data.

Next, detailed hardware configurations of respective components of the video display system will be explained with reference to FIG. 4 and FIG. 5.
As a hardware configuration, the imaging apparatus 100 has a configuration as shown in FIG. 4.

A processor 101 is a semiconductor integrated circuit that performs video processing and controls respective units of the imaging apparatus 100 according to a program. Note that, instead of the processor 101 controlling the entire apparatus, the apparatus may be controlled by a plurality of hardware circuits that share processing.

An imaging mechanism 102 is a mechanism that converts subject light formed into an image by a lens into an electrical signal, performs noise reduction processing and the like, and outputs digital data as image data. The captured image data is stored in a buffer memory, and thereafter predetermined computations are performed by the processor 101, and the data is recorded in a nonvolatile memory 103 or a storage 110.

The nonvolatile memory 103 is a nonvolatile semiconductor storage device that is electrically erasable and recordable, is realized by, for example, a flash memory, and stores data to be saved such as programs executed by the processor 101 and image data.

A main memory 104 is realized by a volatile semiconductor device and is used as a work region such as a buffer memory that temporarily holds image data captured by the imaging mechanism 102, an image display memory of a display apparatus 106, and a load region for programs executed by the processor 101.

An operation apparatus 105 is an apparatus used to receive instructions to the imaging apparatus 100 from a user. The operation apparatus 105 is, for example, an operation member such as a power button for a user to instruct ON/OFF of power of the imaging apparatus 100, a release switch for instructing imaging, and a playback for instructing playback of image data. Additionally, a touch panel having a display function and receiving input by touch is also included in the operation apparatus 105. Note that the release switch has SW1 and SW2. When the release switch enters a half-pressed state, SW1 is turned ON. Consequently, instructions for performing imaging preparation processing such as AF (auto focus) processing, AE (auto exposure) processing, AWB (auto white balance) processing, and EF (flash pre-emission) processing are received. Additionally, when the release switch enters a fully pressed state, SW2 is turned ON. Consequently, an instruction for performing imaging is received. The operation apparatus 105 can also input pan, tilt, and zoom operations of the imaging apparatus 100 and settings of pan, tilt, and zoom. Additionally, the operation apparatus 105 does not necessarily need to be provided in the imaging apparatus 100, and may be a mechanism operated from an external apparatus.

The display apparatus 106 is an apparatus such as a liquid crystal display that displays a viewfinder image during imaging, displays image data that has been captured, and displays characters for interactive operations. Note that the display apparatus 106 does not necessarily need to be provided in the imaging apparatus 100. In this case, the imaging apparatus 100 may be connected to the internal or external display apparatus 106, and it is only required to have at least a display control function for controlling display of the display apparatus 106. Although, in the present embodiment, the imaging apparatus 100 is assumed to include the display apparatus 106, the present disclosure is not limited thereto. For example, the imaging apparatus 100 may not include a function of the display apparatus 106.

A pan/tilt mechanism 107 is a mechanism that moves an imaging direction of the imaging apparatus 100 in a horizontal direction (pan) and a vertical direction (tilt), and includes a device such as a stepping motor for driving pan/tilt and an encoder that measures a rotation angle of the motor and detects a current orientation.

A zoom mechanism 108 is a mechanism that performs enlargement and reduction of an imaging screen, and includes a lens zoom motor that changes a focal length of a lens to realize optical zoom, and a control circuit for realizing an auto-focus function.

A PTZ control circuit 109 is a semiconductor circuit that controls pan, tilt, and zoom operations. The PTZ control circuit 109 receives encoder data and can perform accurate control.

The storage 110 is an apparatus that records image data output from the imaging mechanism 102. The storage 110 may be configured to be attachable to and detachable from the imaging apparatus 100, such as an SD card, or may be built into the imaging apparatus 100. That is, the imaging apparatus 100 only needs to have at least means for accessing the storage 110.

An external interface 111 is an interface apparatus for connection to an external apparatus in accordance with, for example, a USB standard. The imaging apparatus 100 can exchange data with an external apparatus via the external interface 111.

A communication interface 112 is an interface apparatus for communicating with an external apparatus such as the display control apparatus 200. The processor 101 realizes wireless communication via the communication interface 112. Note that the communication method may be a wireless LAN standard such as IEEE 802.11 or may be Bluetooth (registered trademark).

Note that the imaging apparatus 100 according to the present embodiment can operate as a client device in an infrastructure mode of wireless LAN communication. In the case of operating as a client device, the imaging apparatus 100 can participate in a network formed by an access point (hereinafter referred to as an AP) by connecting to an AP in the vicinity. Additionally, the imaging apparatus 100 according to the present embodiment can also operate as a simplified AP, which is a type of AP having limited functions (the simplified AP). Note that in the present embodiment, the AP is an example of a relay device. When the imaging apparatus 100 operates as the simplified AP, the imaging apparatus 100 forms a network by itself. An apparatus in a periphery of the imaging apparatus 100 recognizes the imaging apparatus 100 as an AP and can participate in the network formed by the imaging apparatus 100. A program for operating the imaging apparatus 100 as described above is assumed to be stored in the nonvolatile memory 103. Note that, although the imaging apparatus 100 according to the present embodiment is a type of AP, the imaging apparatus 100 is a simplified AP that does not have a gateway function for transferring data received from a client device to an Internet provider or the like. Therefore, even when the imaging apparatus 100 receives data from another apparatus participating in the network formed thereby, the imaging apparatus 100 cannot transfer the data to an external network such as the Internet. Alternatively, the communication interface 112 may be a wired communication interface instead of a wireless communication interface. That is, the communication interface 112 may be a wired communication interface regardless of the communication method, such as RS-232C, RS-422A, USB, or Ethernet (registered trademark).

As a hardware configuration, the display control apparatus 200 includes, for example, a configuration as shown in FIG. 5.

As already described, in the present embodiment, a hardware configuration of a smartphone is used as an example to explain the display control apparatus 200 that displays video captured by the imaging apparatus 100 and controls display of the imaging apparatus 100. However, the display control apparatus 200 is not limited thereto, and may be an information processing apparatus such as a digital camera having a wireless function, a portable media player, a tablet device, a personal computer, or a foldable portable device.

A processor 201 is a semiconductor device that executes functions of the display control apparatus 200 or controls respective units thereof according to a program. Note that, instead of the processor 201 controlling the entire apparatus, the entire apparatus may be controlled by a plurality of hardware components sharing processing.

A built-in imaging mechanism 202 is a mechanism for imaging that is built into the display control apparatus 200. The built-in imaging mechanism 202 converts subject light formed into an image by a lens into an electrical signal, performs noise reduction processing and the like, and outputs digital data as image data. The captured image data is stored in a buffer memory, after which predetermined computations are performed by the processor 201, and the data is recorded in a nonvolatile memory 203 or a storage 210.

Note that the built-in imaging mechanism 202 realizes a camera function built into, for example, a smartphone, and the imaging apparatus 100 having a PTZ function is a target of PTZ control and a target of display control according to the present disclosure.

The nonvolatile memory 203 is a nonvolatile semiconductor device that is electrically erasable and recordable. The nonvolatile memory 203 stores an operating system (OS) 300, which is basic software executed by the processor 201, various computer programs, setting data, image data, and the like. Additionally, a program for communicating with the imaging apparatus 100 and controlling display thereof is assumed to be stored in the nonvolatile memory 203 and is installed as a camera control application 301. Note that processing of the display control apparatus 200 in the present embodiment is realized by reading a program provided by the camera control application 301. Note that the camera control application 301 has an interface for using basic functions of the OS 300 installed in the display control apparatus 200 (for example, wireless LAN functions, Bluetooth functions, and functions for calling another application). Additionally, the camera control application 301 has a remote imaging function for performing imaging by remotely operating the imaging apparatus 100 from the display control apparatus 200 while viewing a live view image obtained from the imaging apparatus 100 on the display control apparatus 200. Furthermore, the camera control application 301 has a remote browsing function for remotely browsing image data recorded in a storage attached to the imaging apparatus 100 and a function for receiving the image data.

Additionally, the nonvolatile memory 203 holds image data 310, a pan/tilt control table 312, and a marker control table 311. Note that details of these data will be described below.

A main memory 204 is used as a work region such as a buffer memory for temporarily storing image data generated by the built-in imaging mechanism 202, an image display memory of a display apparatus 206, and a load region for programs executed by the processor 201.

An operation apparatus 205 is an apparatus used to receive instructions from a user to the display control apparatus 200. The operation apparatus 205 includes, for example, a power button for instructing ON/OFF of power of the display control apparatus 200, and a touch panel having a display function and receiving input via touch.

The display apparatus 206 is an apparatus such as a liquid crystal display that displays image data and displays characters for interactive operations. Note that the display apparatus 206 is not necessarily integrated into the display control apparatus 200 and may be provided externally.

The storage 210 is an apparatus that records image data output from the built-in imaging mechanism 202 and image data received from a data processing apparatus. The storage 210 may be configured to be attachable to and detachable from the display control apparatus 200, such as an SD card, or may be integrated into the display control apparatus 200.

An external interface 211 is, for example, an interface apparatus for connection to an external apparatus in accordance with a USB standard. The display control apparatus 200 according to the present embodiment can exchange data with an external apparatus via the external interface 211.

A communication interface 212 is an interface apparatus for communicating with an external apparatus such as the imaging apparatus 100 in accordance with, for example, a wireless LAN standard. The processor 201 realizes wireless communication with the external apparatus via the communication interface 212. Note that the imaging apparatus 100 according to the present embodiment is capable of operating as a client device in an infrastructure mode of wireless LAN communication and can participate in a network formed by an AP in a periphery. Additionally, the imaging apparatus 100 may operate as a simplified AP, and the display control apparatus 200 may participate in the simplified AP of the imaging apparatus 100.

A public switched telephone network interface 213 is an interface apparatus used for performing public wireless communication. The display control apparatus 200 can perform voice communication and data communication with other devices via the public switched telephone network interface 213. During voice communication, the processor 201 inputs and outputs audio signals via a microphone 214 and a speaker 215. In the present embodiment, the public switched telephone network interface 213 includes an interface for performing communication using 3G or 4G (LTE, WiMAX, ADSL, FTTH).

Note that the communication interface 212 and the public switched telephone network interface 213 do not necessarily need to be constituted by independent hardware, and may, for example, share one antenna and be realized by the same control chip.

Hereinafter, although in the following description, there may be cases in which the display control apparatus 200 is described as if it were a main body of processing, in practice, the processor 201 reads a program stored in the nonvolatile memory 203 and realizes various processing. Additionally, similarly, in portions described as if the imaging apparatus 100 were a main body of processing, various processing is actually realized by the processor 101 reading a program stored in the nonvolatile memory 103.

Next, data structures handled by the display control apparatus will be explained.

The image data 310 has a data structure including, for example, a frame ID: integer, a timestamp: time, a video buffer: binary data, and analysis data (for example, a face recognition result, an object detection result, and the like). The image data 310 is used for buffering video acquired from the imaging apparatus 100 and for superimposing markers.

Although the display control apparatus 200 is assumed to draw a marker on video data acquired from the imaging apparatus 100, the present disclosure is not limited thereto. For example, the video data acquired from the imaging apparatus 100 may be held as the image data 310 and markers may be drawn based on this (details will be described below).

The marker control table 311 is a table for managing marker types, mask opacity, display conditions, and the like. The marker control table 311 has a data structure including a marker ID: string, a marker type: (for example, a center marker, an aspect marker, or a grid marker), a mask opacity during normal operation: integer (0-100%), a mask opacity during a PTZ operation: integer (0-100%), and application conditions.

The application conditions include a speed threshold: floating-point number and a direction dependent condition: Boolean value. The speed threshold is a threshold indicating, for example, that when a speed of a PTZ operation exceeds this value, mask opacity is to be changed. The direction dependent condition is a Boolean value indicating whether different opacities are to be applied for respective directions of pan/tilt.

Thus, the display control apparatus 200 manages, as the marker control table 311, types of various markers, mask opacity, and application conditions, and adjusts display of the markers based on application conditions corresponding to pan/tilt speed (details will be described below).

Note that the marker control table 311 is stored in the nonvolatile memory 203 and is loaded into the main memory 204 during startup of the apparatus or during startup of the camera control application.

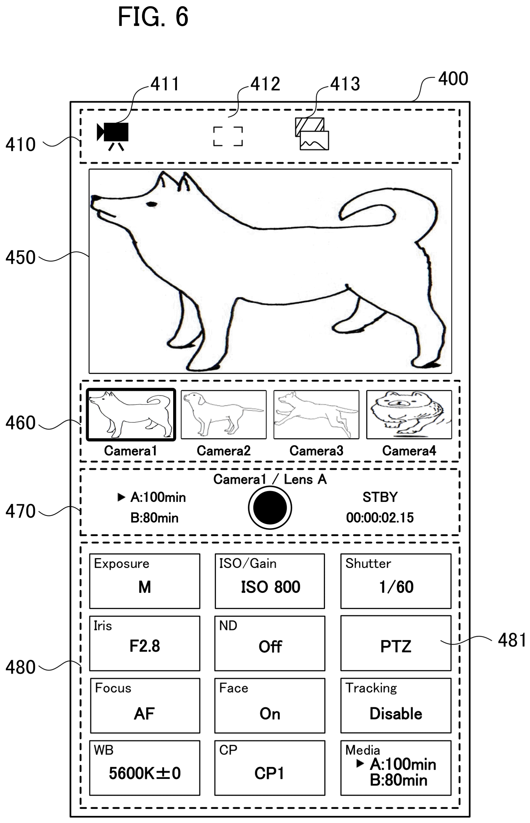

Next, user interfaces of the display control apparatus will be explained with reference to FIG. 6 to FIG. 11.
FIG. 6 is a diagram illustrating an example of a camera control screen.

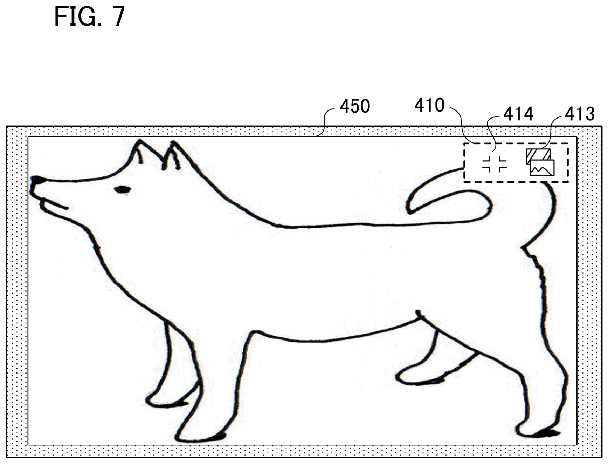

FIG. 7 is a diagram illustrating an example in which a main video region is displayed in full screen.

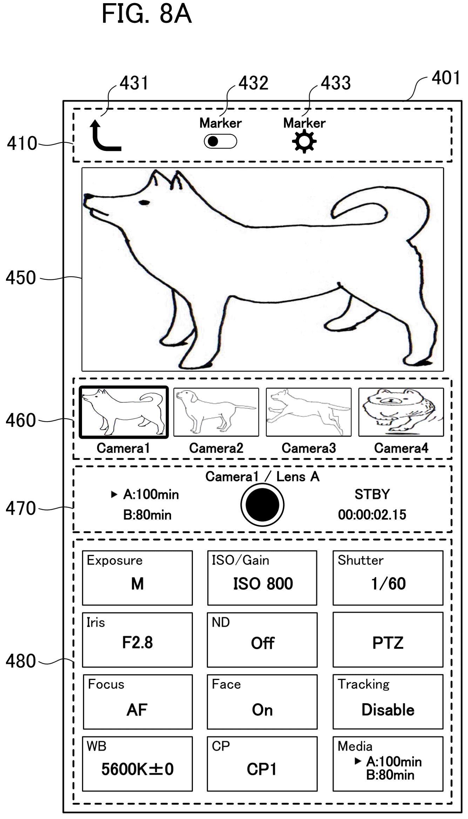

FIG. 8A to FIG. 8D are diagrams illustrating an example of a camera control screen (marker setting mode) for explaining markers displayed in a main video region.

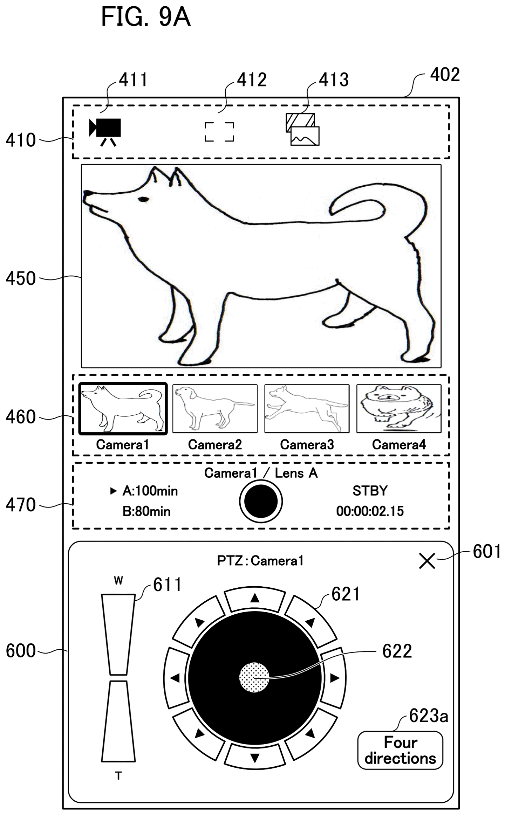

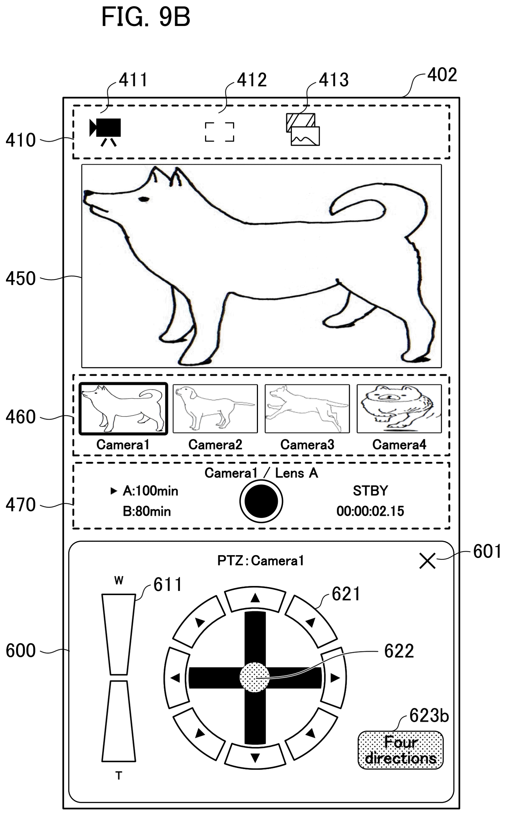

FIG. 9A and FIG. 9B are diagrams explaining PTZ operations on a camera control screen (PTZ operation mode) according to the first embodiment.

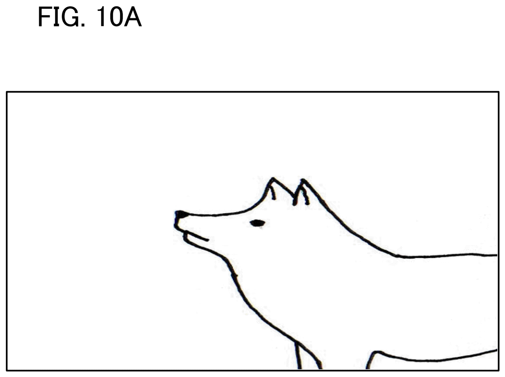

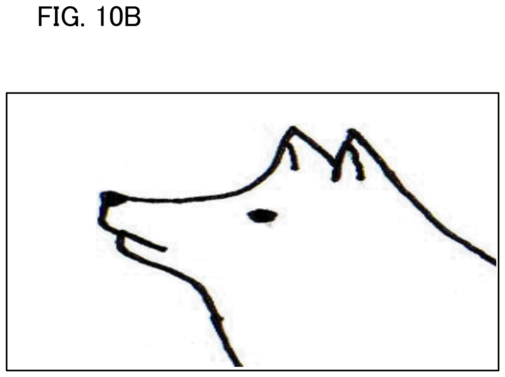

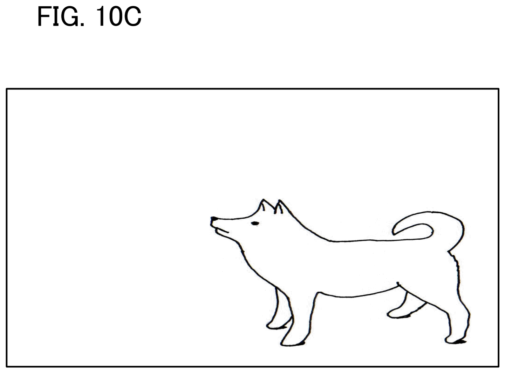

FIG. 10A to FIG. 10C are diagrams explaining zoom-in and zoom-out of a subject in a video region.

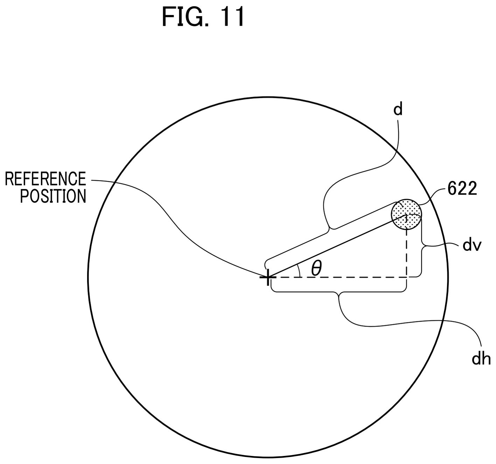

FIG. 11 is a diagram explaining the calculation of a variation amount by a joystick operation.

A camera control screen 400 is a screen displayed on the display apparatus 206 of the display control apparatus 200 by the camera control application 301. The camera control screen 400 is a screen for displaying a still image and video captured by the imaging apparatus 100 and for receiving input for performing control of the imaging apparatus 100.

In this case, the camera control application 301 is capable of simultaneously connecting a plurality of cameras and enabling operation of each imaging apparatus 100. Additionally, the camera control application 301 is capable of receiving video being captured by each camera through communication with the imaging apparatus 100 and displaying the video on the camera control screen. At this time, the camera control application 301 may receive various current settings of the imaging apparatus 100 and display the current settings of the camera on the camera control screen.

In the camera control screen 400, as shown in FIG. 6, video being captured is received from the imaging apparatus 100 connected via communication and is displayed on the screen. At this time, various current settings of the imaging apparatus 100 may be received and displayed on the screen.

An application setting region 410 is a region in which setting buttons for changing various settings of the camera control application 301 are arranged. In the example of the camera control screen 400 shown in FIG. 6, a camera connection setting button 411, a full screen display button 412, and a marker setting button 413 are arranged in the application setting region 410. In a case in which a user presses the camera connection setting button 411 via a touch operation, the screen is switched to a screen for setting a connection of the imaging apparatus. In a case in which a user presses the full screen display button 412 via a touch operation, a display form of the camera control screen 400 is switched, and, as shown in FIG. 7, video of the imaging apparatus displayed in a main video region 450 is displayed in full screen. In a case in which the video of the imaging apparatus is displayed in full screen, the camera control screen 400 displays the application setting region 410 superimposed on the video of the imaging apparatus, as shown in FIG. 7. Note that, in the application setting region 410 in a case in which the video of the imaging apparatus is displayed in full screen, an operation screen display button 414 is arranged, as shown in FIG. 7. In a case in which a user presses the operation screen display button 414 via a touch operation, the camera control screen 400 is switched to the screen shown in FIG. 6. In a case in which a user presses the marker setting button 413 via a touch operation, the camera control screen 400 is switched to the screen shown in FIG. 8A.

The main video region 450 and a sub video region 460 are regions for displaying videos received from the imaging apparatus. In this example, the camera control application 301 is connected to a plurality of imaging apparatuses at the same time, and video being captured by each imaging apparatus is displayed side by side in the sub video region 460. Additionally, in the main video region 450, a video from the imaging apparatus 100 to be controlled by the camera control application 301, which is specified by a user or set as a control target by default, is displayed.

A recording information region 470 is a region for displaying recording information of the imaging apparatus 100 that is a control target and a recording button. The recording information includes, for example, a remaining media time and a timecode of the imaging apparatus 100 to be controlled. Additionally, in a case in which a record button is pressed via a touch operation, the camera control application 301 starts or stops recording of the video being captured by the imaging apparatus 100 to be controlled.

An operation region 480 is a region in which operation buttons for operating the imaging apparatus 100 to be controlled are arranged. The operation buttons are buttons for operating, for example, exposure, shutter speed, zoom, focus, and the like of the imaging apparatus 100 to be controlled. In a case in which a user presses the operation button via a touch operation, the camera control screen 400 executes an operation or performs display of an operation screen. Additionally, a user can display operation buttons arranged outside the region by performing a scrolling operation in the operation region 480.

Next, display of markers in a video display region of the camera control screen will be explained with reference to FIG. 8A to FIG. 8D.
When a user presses the marker setting button 413 via a touch operation, which is arranged in the application setting region 410 shown in FIG. 6, the screen is switched to a camera control screen (marker setting mode) 401 shown in FIG. 8A. In the example of the camera control screen (marker setting mode) 401 shown in FIG. 8A to FIG. 8D, a back button 431, a marker display switching button 432, and a marker detail setting button 433 are arranged in the application setting region 410.

In a case in which a user presses the back button 431 via a touch operation, the camera control screen (marker setting mode) 401 shown in FIG. 8A to FIG. 8D is switched to the camera control screen 400 shown in FIG. 6.

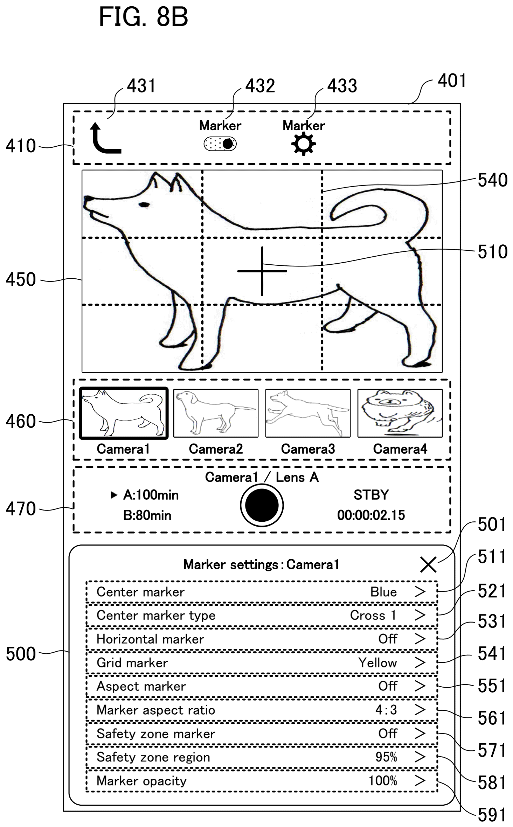

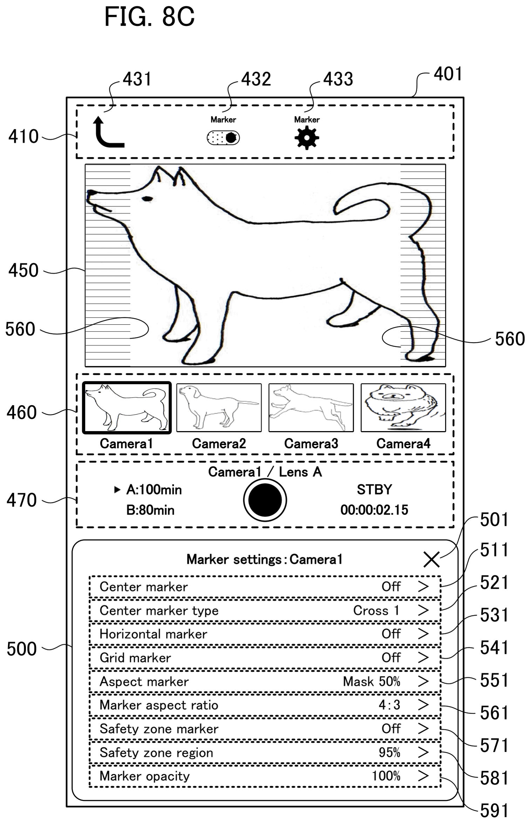

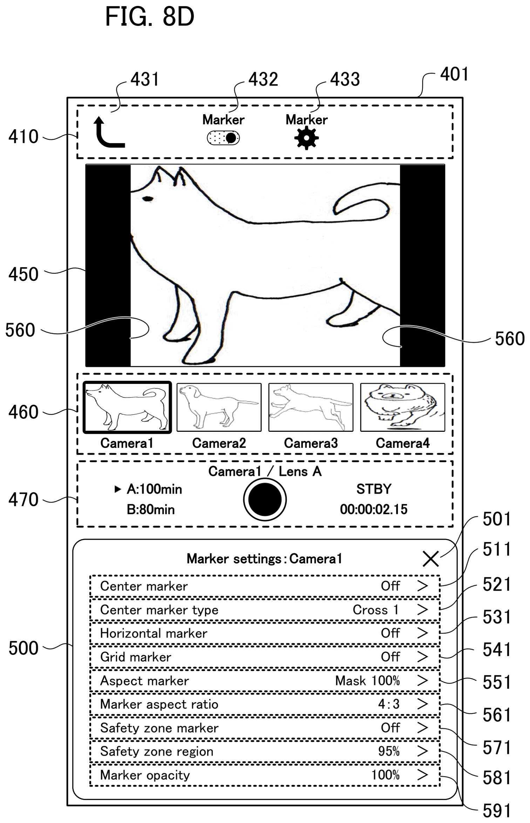

In a case in which a user presses the marker display switching button 432 via a touch operation, enabling or disabling of display of a marker superimposed on the main video region 450 is switched in the camera control screen (marker setting mode) 401. In this context, "marker display" is a function that facilitates confirmation of composition during imaging or a safe imaging region by superimposing a visual guide on video. The marker display switching button 432 shown in FIG. 8A indicates that marker display is disabled. In this case, as shown in FIG. 8A, the video from the imaging apparatus 100 to be controlled is displayed in the main video region 450 in a state in which no markers are superimposed thereon. The marker display switching button 432 shown in FIG. 8B to FIG. 8D indicates that marker display is enabled. In this case, as shown in FIG. 8B to FIG. 8D, the video from the imaging apparatus 100 to be controlled is displayed in the main video region 450 in a state in which markers are superimposed thereon. In the main video region 450 shown in FIG. 8B, a center marker 510 and a grid marker 540 are displayed. In the main video region 450 shown in FIG. 8C, a 4:3 aspect marker 560 having a mask opacity of 50% is displayed. In the main video region 450 shown in FIG. 8D, the 4:3 aspect marker 560 having a mask opacity of 100% is displayed.

The center marker 510 is a marker for indicating a central position of a screen and thereby facilitates central placement of a subject during framing. The grid marker 540 is a marker that displays lines that equally divide the screen to facilitate determining the composition, and by dividing the screen, the placement of the subject can be easily adjusted. The aspect marker 560 is a marker for confirming composition suitable for frames having different screen ratios (aspect ratios), and is intended to enable shooting while taking video of different aspect ratios into consideration.

In a case in which a user presses the marker detail setting button 433 via a touch operation, the operation region 480 of the camera control screen 401 is switched to a marker detail setting region 500. In the marker detail setting region 500, interface objects for setting display forms of various markers, such as a close button 501, a center marker setting object 511, a grid marker setting object 541, and an aspect marker setting object 551, are arranged. In a case in which a user presses the close button 501 via a touch operation, the camera control screen 400 hides the marker detail setting region 500 and returns to the state of the operation region 480 shown in FIG. 8A. In a case in which the marker display switching button 432 in FIG. 8A to FIG. 8D is enabled, markers on the main video region 450 are displayed according to setting contents in the marker detail setting region 500. In the marker detail setting region 500 of FIG. 8B, the center marker setting object 511 is set to blue and the grid marker setting object 541 is set to yellow. Therefore, in the main video region 450 of FIG. 8B, the center marker 510 and the grid marker 540 are displayed according to these color settings. In the marker detail setting region 500 of FIG. 8C, the aspect marker setting object 551 is set to mask 50%, and the marker aspect ratio setting 561 is set to 4:3. Therefore, in the main video region 450 of FIG. 8C, the 4:3 aspect marker 560 is displayed, according to these settings, with a mask having an opacity of 50%. In the marker detail setting region 500 of FIG. 8D, the aspect marker setting object 551 is set to mask 100%, and the marker aspect ratio setting 561 is set to 4:3. Therefore, in the main video region 450 of FIG. 8D, the 4:3 aspect marker 560 is displayed, according to these settings, with a mask having an opacity of 100%.

Next, PTZ operation on the camera control screen will be explained with reference to FIG. 9A to FIG. 11.
When a user presses a PTZ operation button 481 via a touch operation, which is arranged in the operation region 480 of FIG. 6, the screen is switched to a camera control application screen (PTZ operation mode) 402 shown in FIG. 9A and FIG. 9B. In the camera control screen 400 of FIG. 9A and FIG. 9B, a PTZ operation region 600 is displayed. In the PTZ operation region 600, a close button 601, a zoom operation button 611, direction buttons 621, a joystick 622, and direction limiting buttons 623a and 623b are arranged. In a case in which a user presses the close button 601 via a touch operation, in the camera control screen 400, the PTZ operation region 600 is hidden and the region returns to the initial state of the operation region 480.

In a case in which a user presses the zoom operation button 611 via a touch operation, the camera control application changes a zoom magnification of the imaging apparatus 100. Specifically, in a case in which the zoom operation button 611 is pressed upward via a touch operation, the camera control application 301 controls the zoom magnification of the imaging apparatus 100 such that zoom-in operation is performed, and in a case in which the zoom operation button 611 is pressed downward via a touch operation, the camera control application 301 controls the zoom magnification of the imaging apparatus 100 such that zoom-out operation is performed. Furthermore, the camera control application 301 displays video received from the imaging apparatus 100 after change of zoom magnification in the main video region 450 and the sub video regions 460 of the camera control screen 400. By a zoom-in operation of the imaging apparatus 100, an imaging angle of view of video being imaged is changed, for example, as shown from FIG. 10A to FIG. 10B. Additionally, by zoom-out operation of the imaging apparatus 100, an imaging angle of view of video being imaged is changed, for example, as shown in FIG. 10A to FIG. 10C. Note that the operation is not limited to an operation performed by the zoom operation button 611, provided that the zoom magnification of the imaging apparatus 100 can be changed by the operation. While the zoom operation button 611 is pressed in the camera control application 301 via a touch operation, the display control apparatus 200 transmits a change amount of zoom magnification to the imaging apparatus 100 at fixed intervals. The change amount of zoom magnification may be a predetermined value or may be a value set by a user.

In a case in which a user presses the direction button 621 via a touch operation, the camera control application 301 changes a pan/tilt orientation of the imaging apparatus 100. In a case in which the direction button 621 that has been pressed via a touch operation indicates an upward direction, the camera control application 301 causes the imaging apparatus 100 to tilt upward. In a case in which the direction button 621 that has been pressed via a touch operation indicates a downward direction, the camera control application 301 causes the imaging apparatus 100 to tilt downward. Additionally, in a case in which the direction button 621 that has been pressed via a touch operation indicates a left direction, the camera control application 301 causes the imaging apparatus 100 to pan leftward. In a case in which the direction button 621, which has been pressed via a touch operation, indicates the right direction, the camera control application 301 causes the imaging apparatus 100 to pan rightward. In a case in which the direction button 621, which has been pressed via a touch operation, indicates an upper-right direction, the camera control application 301 causes the imaging apparatus 100 to pan rightward and tilt upward. In a case in which the direction button 621, which has been pressed via a touch operation, indicates a lower-right direction, the camera control application 301 causes the imaging apparatus 100 to pan rightward and tilt downward. In a case in which the direction button 621, which has been pressed via a touch operation, indicates a lower-left direction, the camera control application 301 causes the imaging apparatus 100 to pan leftward and tilt downward. In a case in which the direction button 621, which has been pressed via a touch operation, indicates an upper-left direction, the camera control application 301 causes the imaging apparatus 100 to pan leftward and tilt upward. That is, the camera control application 301 performs control so as to drive the imaging apparatus 100 in a direction corresponding to a direction button selected by the user from among the plurality of direction buttons 621. While the direction button 621 is being pressed via a touch operation in the camera control application 301, the display control apparatus 200 calculates an amount of movement of at least one of the pan and the tilt corresponding to the direction button selected by the user, and transmits the calculated amount of movement to the imaging apparatus 100 at constant intervals. The amount of movement of the pan and the tilt may be a predetermined value, or may be a value set by a user.

The joystick 622 is an interface object for inputting a direction and an amount of displacement from a reference position, with the center thereof being the reference position, by a swipe operation. The direction operable by the joystick 622 in FIG. 9A is 360 degrees. In this case, as shown in FIG. 9A, the background of the joystick 622 clearly indicates that the operable direction is 360 degrees. Additionally, the directions operable by the joystick 622 in FIG. 9B are four directions of up, down, left, and right. In this case, as shown in FIG. 9B, the background of the joystick 622 clearly indicates that the operable directions are four directions of up, down, left, and right.

By the user pressing the direction limit button 623 via a touch operation, the directions operable by the joystick 622 can be switched. In a case in which the directions operable by the joystick 622 are 360 degrees, the direction limit button 623a shown in FIG. 9A is displayed. In a case in which the directions operable by the joystick 622 are four directions of up, down, left, and right, the colored direction limit button 623b shown in FIG. 9B is displayed.

In a case in which the user performs a swipe operation on the joystick 622, the camera control application 301 determines a horizontal displacement amount dh and a vertical displacement amount dv, as shown in FIG. 11, based on the input direction θ and the input displacement amount d. The direction θ is an angle of the joystick 622 with respect to the reference position as a center, and has a range of values from 0 degrees to less than 360 degrees (0 rad to less than 2π rad). Note that in a case in which the directions operable by the joystick 622 are four directions of up, down, left, and right, the direction θ is limited to 0 degrees, 90 degrees, 180 degrees, and 270 degrees (0 rad, π/2 rad, π rad, and 3π/2 rad). The horizontal displacement amount dh is calculated by d * cosθ. Additionally, the vertical displacement amount dv is calculated by d * sinθ. In a case in which the horizontal displacement amount dh is a positive value, the camera control application 301 causes the imaging apparatus 100 to pan rightward at a speed corresponding to an absolute value of the horizontal displacement amount dh. In a case in which the horizontal displacement amount dh is a negative value, the camera control application 301 causes the imaging apparatus 100 to pan leftward at a speed corresponding to the absolute value of the horizontal displacement amount dh. In a case in which the vertical displacement amount dv is a positive value, the camera control application 301 causes the imaging apparatus 100 to tilt upward at a speed corresponding to an absolute value of the vertical displacement amount dv. In a case in which the vertical displacement amount dv is a negative value, the camera control application 301 causes the imaging apparatus 100 to tilt downward at a speed corresponding to an absolute value of the vertical displacement amount dv. Note that the calculation method is not limited to the above-mentioned method, provided that the horizontal displacement amount and the vertical displacement amount of the joystick 622 from the reference position can be acquired. While a swipe operation is being performed on the joystick 622, the camera control application 301 of the display control apparatus 200 transmits the amounts of movement of the pan and the tilt to the imaging apparatus 100 at constant intervals. The amount of movement of the pan is a value obtained by multiplying the horizontal displacement amount by a predetermined coefficient. The amount of movement of the tilt is a value obtained by multiplying the vertical displacement amount by the predetermined coefficient. In this context, the predetermined coefficient may be a predetermined value, or may be a value set by a user. Note that the calculation method is not limited to the above-mentioned method, provided that a pan movement amount and a tilt movement amount can be determined based on operation of the joystick 622.

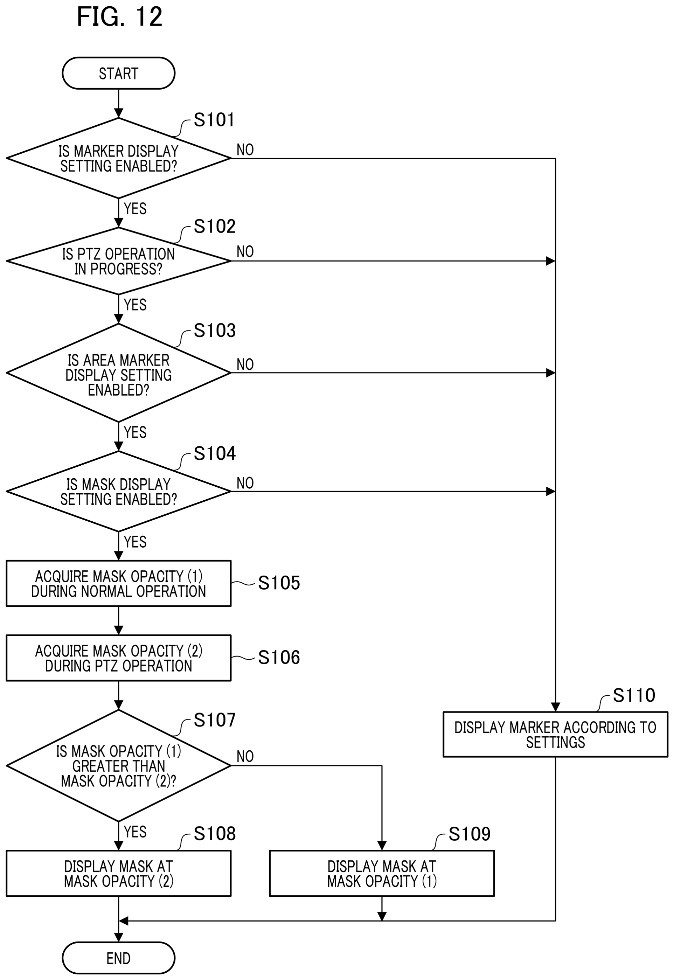

Next, processing for determining a mask opacity of a marker displayed in a main video region of the camera control application will be explained with reference to FIG. 12 to FIG. 13D.
FIG. 12 is a flowchart illustrating processing for determining the mask opacity of a marker displayed in the main video region of the camera control application according to the first embodiment.

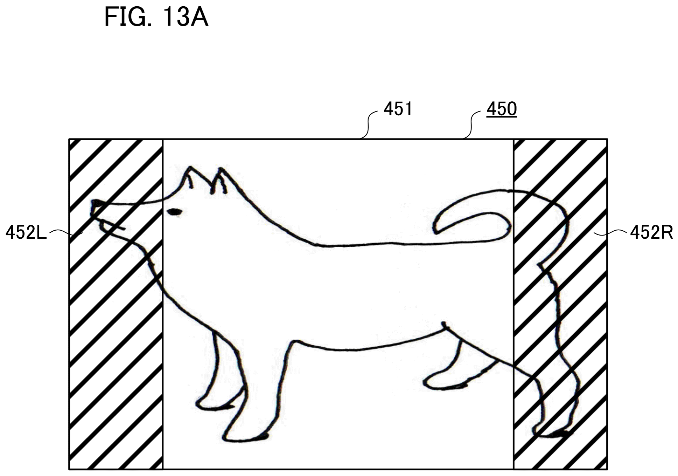

FIG. 13A is a diagram illustrating a case in which markers are displayed on the left and right of the main video region when no pan operation is being performed.

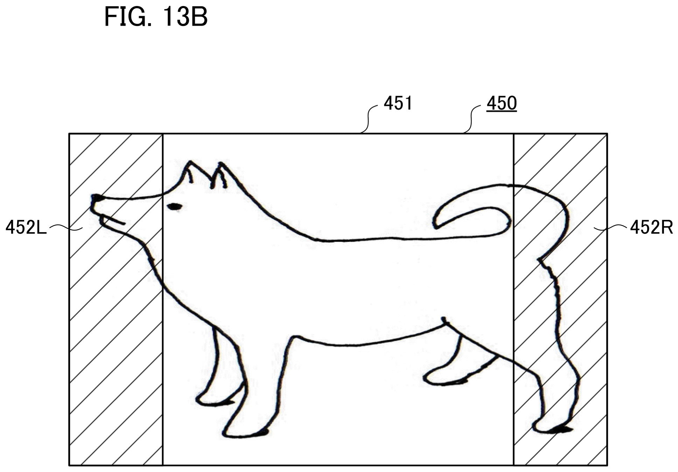

FIG. 13B is a diagram illustrating a case in which markers are displayed on the left and right of the main video region when a pan operation is being performed.

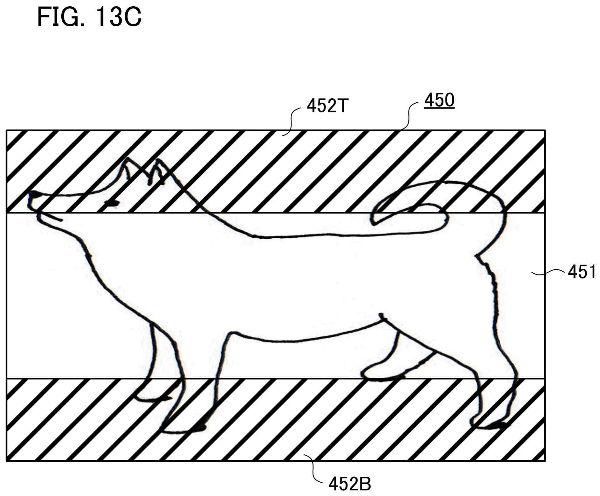

FIG. 13C is a diagram illustrating a case in which markers are displayed at the top and bottom of the main video region when no tilt operation is being performed.

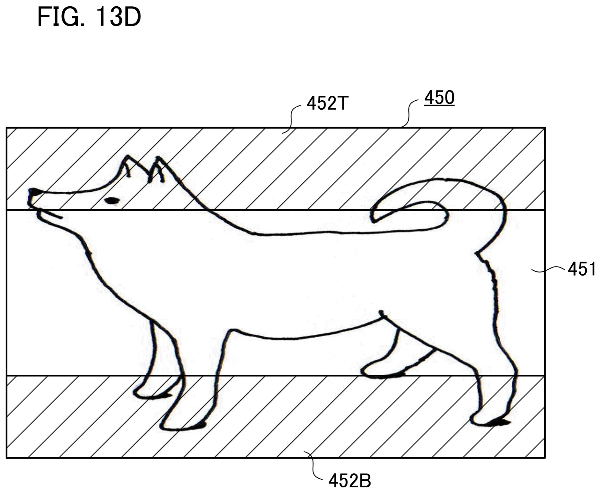

FIG. 13D is a diagram illustrating a case in which markers are displayed at the top and bottom of the main video region when a tilt operation is being performed.

The processing for determining the mask opacity of the marker displayed in the main video region of the camera control application shown in FIG. 12 is realized by the processor 201 expanding the camera control application recorded in the nonvolatile memory 203 into the main memory 204 and executing the camera control application.. Here, the steps in the flowchart shown in FIG. 12 will be explained in order with appropriate reference to the diagrams of the camera control screen described above.

First, the processor 201 determines whether or not display of the marker is enabled (S101), and if display of the marker is enabled (S101: Yes), the processing proceeds to S102. Whether or not display of the marker is enabled is determined by acquiring information from the marker control table 311. Note that regarding the setting information in the marker control table 311, data stored in the nonvolatile memory 203 is expanded into the main memory 204 when the apparatus is started or when the camera control application is launched. Further, whether the display of the marker is enabled or disabled is switched by a user operation, for example, by pressing the marker display switching button 432 via a touch operation shown in FIG. 8A to FIG. 8D.

Next, the processor 201 determines whether or not a PTZ operation is being performed (S102). If the PTZ operation is being performed (S102: YES), the process proceeds to step S103, and if no PTZ operation is being performed (S102: No), the process proceeds to step S110. Whether or not the PTZ operation is being performed may be determined, for example, by determining that the PTZ operation is being performed in a case in which any of the direction buttons 621 and the joystick 622 shown in FIG. 9A and FIG. 9B is pressed, or may be determined by acquiring information from the pan/tilt control table 312.

Next, the processor 201 determines whether or not display of an area marker is enabled (S103). If the display of the area marker is enabled (S103: YES), the process proceeds to step S104, and if the display of the area marker is not enabled (S103: NO), the process proceeds to step S110. Here, the area marker is a marker that clearly indicates a specific area, such as an aspect marker or a safety zone marker. Additionally, the safety zone marker is a marker that indicates a safe video display region and is used to prevent important information from being cropped. Whether or not the area marker is enabled is determined by acquiring the types of various markers from the marker control table 311. Note that display forms of the various markers according to the types of the markers can be set by a user operation. For example, the display form of the aspect marker can be set by an aspect marker setting object 551 shown in FIG. 8B to FIG. 8D.

Next, the processor 201 determines whether or not a display setting of a mask is enabled (S104). If the display setting of the mask is enabled (S104: YES), the process proceeds to step S105, and if the display setting of the mask is not enabled (S104: NO), the process proceeds to step S110. Whether or not the display setting of the mask is enabled is determined by determining whether or not the display setting of the mask corresponding to each of the various types of markers in the marker control table 311 is enabled.

Next, the processor 201 acquires a mask opacity during normal operation from the marker control table 311 (S105). The mask opacity during normal operation stored in the marker control table 311 can be set by a user operation. For example, the mask opacity of the aspect marker can be set by the aspect marker setting object 551 shown in FIG. 8B to FIG. 8D. As an example, in the present embodiment, the mask opacity during normal operation can be set between 100% and 25%.

Next, the processor 201 acquires a mask opacity during PTZ operation from the marker control table 311. Additionally, the mask opacity during a PTZ operation may be a predetermined value held in advance, or may be settable by a user operation.

Next, the processor 201 determines whether or not the mask opacity during normal operation acquired in step S105 is greater than the mask opacity during PTZ operation acquired in step S106 (S107). As a result, in a case in which the mask opacity during normal operation is greater than the mask opacity during PTZ operation (S107: YES), the process proceeds to step S108, and in a case in which the mask opacity during normal operation is not greater (S107: NO), the process proceeds to step S109.

In a case in which the mask opacity during normal operation is greater than the mask opacity during PTZ operation, the processor 201 displays the mask in the main video region 450 at the mask opacity during PTZ operation acquired in step S106 (S108).

In a case in which the mask opacity during normal operation is less than or equal to the mask opacity during PTZ operation, the processor 201 displays the mask in the main video region 450 at the mask opacity during normal operation acquired in step S105 (S109).

In a case in which all determinations in steps S101 to S104 are "NO", the processor 201 acquires setting content of various markers from the marker control table 311 and displays the markers in the main video region 450 according to the setting contents of the various markers (S110). Additionally, the setting contents of the various markers stored in the marker control table 311 can be set by a user through a marker detail setting region 500 shown in FIG. 8B to FIG. 8D.

According to the processing for determining the mask opacity of the marker displayed in the main video region shown in FIG. 12, it is ensured that the mask opacity of the area marker during a PTZ operation is equal to or less than the mask opacity of the area marker when the PTZ operation is not being performed.

FIG. 13A is a diagram illustrating display of aspect markers on left and right of the main video region 450 in a case in which no pan operation is being performed, and FIG. 13B is a diagram illustrating display of aspect markers on left and right of the main video region 450 in a case in which a pan operation is being performed. In both diagrams, the main video region 450 is divided into a marker non-display region 451 and marker display regions 452L and 452R. Then, in the marker display region 452, (mask opacity during a pan operation) ≦ (mask opacity when no pan operation is being performed) is satisfied. As a result, the left and right video regions become more visible to the user, thereby improving visibility during the pan operation.

Although in the present embodiment, the mask opacity during the pan/tilt operation is uniformly set to be equal to or less than the mask opacity in a case in which no pan/tilt operation is being performed, the present disclosure is not limited thereto. For example, it may be determined whether to change the opacity based on the operation direction and the position of the marker displayed in a superimposed manner. FIG. 13C illustrates a case in which the aspect markers are displayed at the top and bottom of the main video region 450 when no tilt operation is being performed, and FIG. 13D illustrates a case in which the aspect markers are displayed at the top and bottom of the main video region 450 during a tilt operation. In both diagrams, the main video region 450 is divided into a marker non-display region 451 and marker display regions 452T and 452B. Then, in the marker display region 452, (mask opacity during a tilt operation) ≦ (mask opacity when no tilt operation is being performed) is satisfied. As a result, the upper and lower video regions become more visible to the user, thereby improving visibility during the tilt operation.

Thus, in a case in which an area marker such as an aspect marker is arranged at the periphery of the display region, the subject, the background, and the like can be made more visible to the user by reducing the mask opacity of the marker in the operation direction. In particular, changing the mask opacity of the markers displayed on the left and right of the video region during a pan operation, and changing the mask opacity of the markers displayed at the top and bottom of the video region during a tilt operation, are effective for improving visibility.

As explained above, in the first embodiment, in a case in which the mask is enabled in the marker display settings and the mask opacity during normal operation is greater than the mask opacity during PTZ operation, the mask can be displayed at the mask opacity during PTZ operation. Note that although the first embodiment has been explained using an example in which the mask opacity is changed during a PTZ operation, the present disclosure is not limited to a PTZ operation and may be applied to other camera controls such as movement of a focus position or selection of a tracking target.

### [Second embodiment]

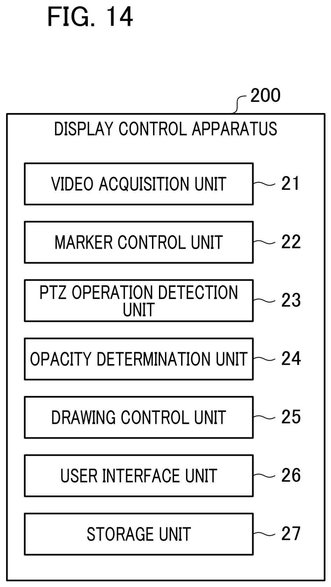

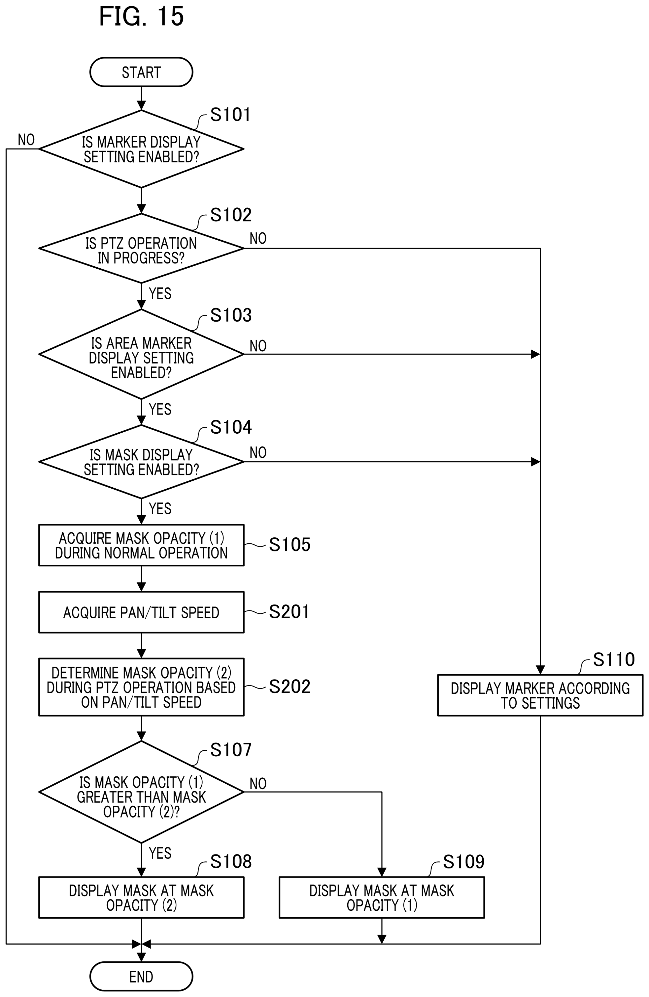

Hereinafter, a second embodiment according to the present disclosure will be described with reference to FIG. 14 and FIG. 15.
FIG. 14 is a functional configuration diagram of a display control apparatus according to the second embodiment.
FIG. 15 is a flowchart illustrating processing for determining a mask opacity of a marker displayed in a main video region of a camera control application according to the second embodiment.

In the video display of the first embodiment, display control is explained in which visibility during PTZ operations is improved by changing mask opacity depending on whether or not a PTZ operation is being performed, in a case in which an area marker is displayed in a video region.
Although the present embodiment is based on the same concept as the first embodiment, mask opacity is changed based on a pan/tilt speed.
Since a system configuration in the present embodiment is similar to that in the first embodiment, explanation thereof is omitted. The PTZ control unit 13 of the imaging apparatus 100 according to the present embodiment may transmit a current camera orientation and an operation speed to the display control apparatus 200, via the communication unit 14. As a result, the display control apparatus 200 can dynamically change opacity of a marker according to a state of the imaging apparatus 100.

Additionally, as shown in FIG. 14, a functional configuration of the display control apparatus 200 according to the present embodiment includes a PTZ operation detection unit 23 and an opacity determination unit 24, in addition to the configuration of the first embodiment. The PTZ operation detection unit 23 is a functional unit that detects a PTZ operation of the imaging apparatus 100 in real time and transmits the operation information to the opacity determination unit 24. In the present embodiment, the PTZ operation detection unit 23 analyzes a current camera angle, a zoom magnification, and an operation speed, and provides information for applying opacity changing processing in a case in which a predetermined threshold is exceeded.

The opacity determination unit 24 is a functional unit that determines an optimal opacity of various markers based on information acquired from the PTZ operation detection unit. Specifically, in a case in which a pan/tilt speed or a zoom magnification exceeds a predetermined threshold, processing is executed to reduce the opacity as compared to that during normal operation to ensure visibility.
Additionally, a data structure handled by the display control apparatus 200 according to the present embodiment will be explained. The display control apparatus 200 according to the present embodiment handles the pan/tilt control table 312 in addition to the image data 310 and the marker control table 311. As in the first embodiment, the marker control table 311 is stored in the nonvolatile memory 203 and is loaded into the main memory 204 during startup of the apparatus or during startup of the camera control application.
The pan/tilt control table 312 is a table that holds a pan/tilt driving state and past histories. The pan/tilt control table 312 has a data structure including, for example, a camera ID: character string, a current pan angle: floating point number, a current tilt angle: floating point number, past operation histories, and an operation mode (for example, manual mode or auto tracking mode). In this context, the past operation histories consist of a data structure including a past time: time, a pan angle: floating point number, a tilt angle: floating point number, and a speed: floating point number.
The pan/tilt control table 312 records pan/tilt position of the camera and holds operation histories, and is used for threshold calculation during change of opacity and for comparison with past motions.
The display control apparatus 200 holds, as the pan/tilt control table 312, pan/tilt angle of the camera and past operation histories, and changes mask opacity of a marker in a case in which an operation speed exceeds a predetermined threshold.

Hereinafter, processing for determining a mask opacity of a marker displayed in a main video region of the camera control application according to the present embodiment will be explained with reference to FIG. 15.

The processing for determining the mask opacity of a marker in the present embodiment is based on FIG. 12 of the first embodiment, and therefore, only the differences from the first embodiment will be explained. In FIG. 15, processing of step S106 in FIG. 12 is replaced by processing of step S201 and step S202.

The processor 201 obtains a pan/tilt speed (S201). The pan/tilt speed can be obtained, for example, from the pan/tilt control table 312. Alternatively, the pan/tilt speed may be calculated from an input direction θ and a displacement amount d obtained in a case in which a swipe operation is performed on the joystick 622 shown in FIG. 9A and FIG. 9B, or may be obtained from an acceleration sensor (not illustrated) of the display control apparatus 200.

Next, the processor 201 determines a mask opacity during a PTZ operation based on the pan/tilt speed acquired in step S201 (S202). The mask opacity is set to a higher opacity if the pan/tilt speed is slow, and is set to a lower opacity if the speed is fast. The pan/tilt speed may be determined, for example, by comparison with a predetermined reference value, or may be determined by dividing a range between a minimum settable value and a maximum settable value of the pan/tilt speed. The mask opacity may be calculated in inverse proportion to the pan/tilt speed, alternatively, an optimal relational expression may be derived through learning, and the mask opacity may be obtained based on the pan/tilt speed by applying to the relational expression.

As a result, when the pan/tilt speed is low, the marker is displayed clearly, and when the pan/tilt speed is high, the state under the marker region becomes more clearly visible. Thus, the visibility of the video displayed in the main video region 450 during a PTZ operation is improved. Accordingly, even in a case in which it is difficult to confirm the imaging range, such as when the imaging range is quickly changed, the visibility is improved by dynamically changing the opacity of the marker. In contrast, in a case in which it is easy to confirm the imaging range, such as when the pan/tilt speed is slowly changed, the mask opacity set by the user is applied, thereby making it possible to improve usability.

The processor 201 displays the mask with the mask opacity during a PTZ operation determined in step S202, in the same manner as the processes shown in FIG. 12 of the first embodiment (S107 to S109).

As described above, in the second embodiment, the mask opacity during PTZ operation is determined based on the pan/tilt speed, and in a case in which the mask opacity during normal operation is greater than the mask opacity during the PTZ operation, the mask can be displayed at an appropriate mask opacity according to the speed.

### [Third Embodiment]

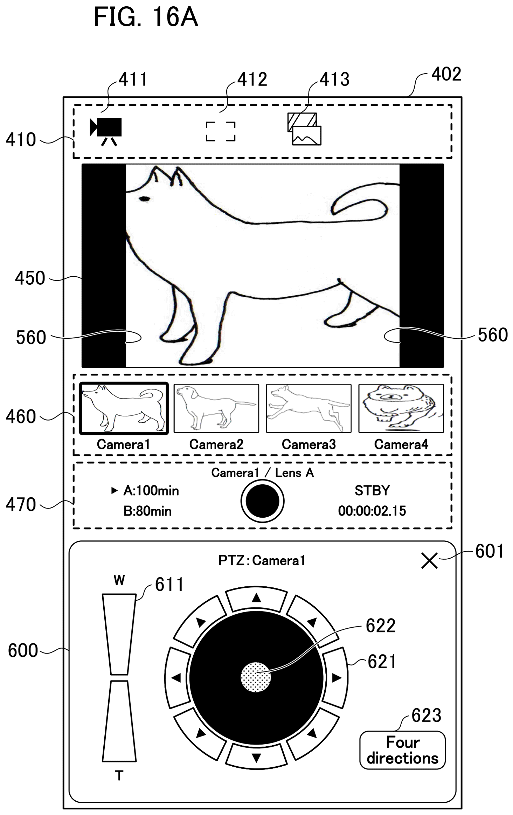

Hereinafter, the third embodiment will be explained with reference to FIG. 16A to FIG. 17.
In the video display of the first and second embodiments, explanation has been given of display control for improving visibility during a PTZ operation by changing the mask opacity depending on whether or not the PTZ operation is being performed, in a case in which an area marker is displayed in a video region.
Although the present embodiment is based on the same concept as the first embodiment, it changes the mask opacity of a marker corresponding to the operation direction by focusing on the pan/tilt operation direction.
In the present embodiment, since a system configuration and hardware configurations of the imaging apparatus 100 and the display control apparatus 200 are similar to those of the first embodiment, differences will be mainly explained.

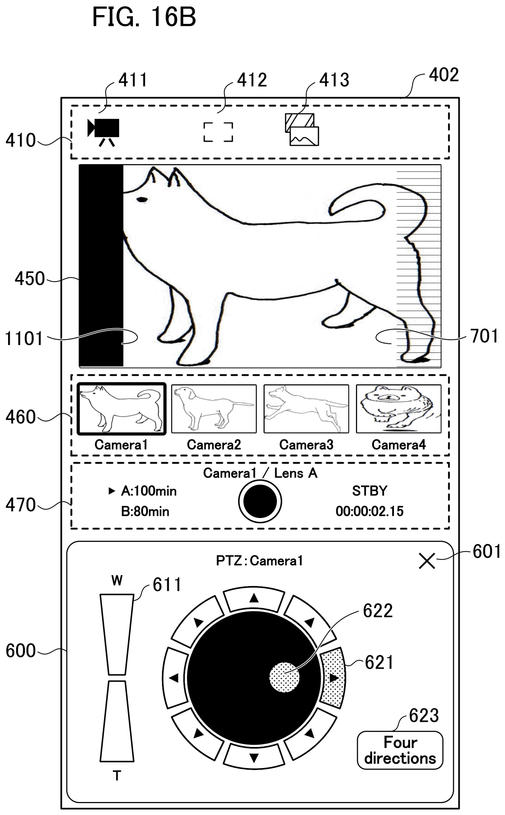

FIG. 16A and FIG. 16B are diagrams for explaining the correspondence between a PTZ operation and a marker displayed in a video region in a camera control screen (PTZ operation mode) according to the third embodiment.

In the main video region 450 shown in FIG. 16A and FIG. 16B, the 4:3 aspect marker 560 is displayed with a mask having a mask opacity of 100%, similarly to FIG. 8D. Additionally, in the camera control screen 400 shown in FIG. 16A and FIG. 16B, the PTZ operation region 600 is displayed, similarly to FIG. 9A.

In a case in which a direction button 621 pressed via a user touch operation or the joystick 622 being swiped by a user indicates the right, the display of the camera control screen 400 is changed, for example, from FIG. 16A to FIG. 16B. An aspect marker 701 displays the mask at a mask opacity during PTZ operation only in the pan/tilt operation direction and displays the mask at a mask opacity during normal operation in other directions. However, in a case in which the opacity during PTZ operation is greater than the opacity during normal operation, the mask is displayed at the opacity during normal operation. This is based on the same concept as the first embodiment. In the operation model of the present embodiment, there are eight pan/tilt operation directions. For example, in a case in which the pan/tilt operation direction is the upper right, the mask opacities of the right and upper masks are changed. Although, in the present embodiment, the operation direction of the direction button 621 or the joystick 622 is acquired as the pan/tilt operation direction, the present disclosure is not limited thereto, and the operation direction may be acquired from the processor 201 of the imaging apparatus 100.

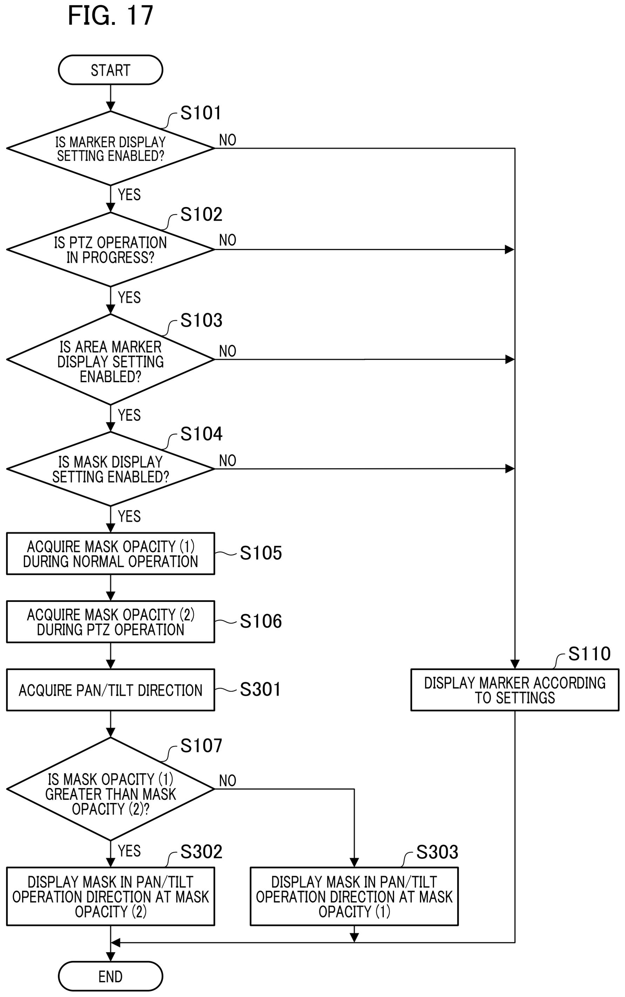

Next, processing for determining the mask opacity of a marker displayed in the main video region of the camera control application according to the present embodiment will be explained with reference to FIG. 17.
FIG. 17 is a flowchart illustrating processing for determining the mask opacity of a marker displayed in the main video region of the camera control application according to the third embodiment.

The processing for determining the mask opacity of a marker in the present embodiment is based on FIG. 12 of the first embodiment, and therefore, only the differences from the first embodiment will be explained. In FIG. 17, the process of step S301 is added between step S106 and step S107 of FIG. 12, the process of step S108 is replaced with that of step S302, and the process of step S109 is replaced with that of step S303.

The processor 201 acquires a pan/tilt operation direction (S301). The pan/tilt operation direction is acquired from the operation direction of the direction button 621 or the joystick 622, control information transmitted from the imaging apparatus 100, or a pan/tilt control table 312.

In a case in which the result of the processing in step S107 is "YES", the processor 201 displays a mask in the pan/tilt operation direction acquired in step S301 at the mask opacity during the pan/tilt operation (S302). The pan/tilt operation direction includes eight directions, for example, in a case in which the pan/tilt operation direction is the upper right, the mask opacities of the right-side mask and the upper-side mask are changed when markers are displayed in those directions.

In a case in which the result of the processing in step S107 is "NO", the processor 201 displays the mask in the pan/tilt operation direction acquired in step S301 at the mask opacity during normal operation (S303).

As explained above, in the present embodiment, the mask opacity of a portion corresponding to the pan/tilt operation direction is displayed at the mask opacity during a PTZ operation. As a result, visibility is improved by dynamically changing the mask opacity of a marker superimposed on a position where the imaging range is difficult to confirm. In contrast, for a marker superimposed on a position where the imaging range is easy to confirm, usability can be improved by applying the mask opacity set by the user.

### [Application to Other Markers]

In the first to third embodiments, processing has been explained for dynamically changing the marker opacity of area markers (markers displayed in specific areas), such as an aspect marker and a safety zone marker, during a pan/tilt operation.

The present disclosure is considered to be applicable to markers such as the following.

### (1) Center Marker

The center marker is a marker for indicating the center position of a screen, and facilitates the central placement of a subject during framing.

As the center marker, a small crosshair or dot is displayed at the center of the screen and is often used as a fixed marker that does not move during a pan/tilt operation.

For the center marker, visibility can be improved by changing the opacity so that a user does not lose sight of a subject during a pan/tilt operation. The screen can be made easier to view, for example, by setting the marker translucent during a pan/tilt operation and returning the opacity to its original level when the operation is stopped.

### (2) Grid Marker

The grid marker displays lines that divide a screen evenly, making it easier to determine a composition. It is used as a guide for screen division and is effective for adjusting the placement of a subject.

The grid marker is displayed as grid lines that divide the screen into, for example, 3×3 (nine divisions) or 4×4 (sixteen divisions), and is commonly used in video editing software and camera viewfinders.

For the grid marker, if the grid is too prominent during a pan/tilt operation, it may be difficult to view the screen. Therefore, processing is conceivable in which the opacity of the grid is reduced when the camera is being moved, and is returned to the original opacity when the camera is stopped.

### (3) Framing Marker (Frame Marker)

A framing marker is a marker for emphasizing a specific area within a screen, and can visually indicate where an important subject should be placed.

As the framing marker, a frame is displayed at the four corners of the screen or in a specific area. For example, in a live streaming camera, a portion where text or a logo is to be placed may be displayed as a guide.

For the framing marker, visibility is maintained by adjusting the transparency of the framing marker during a pan/tilt operation. For example, processing is conceivable in which the opacity of the framing marker is decreased during a pan/tilt operation and is returned to the original opacity when the operation is stopped.

### (4) Focus Peaking

Focus peaking is a visual assistance function for emphasizing a region that is in focus, and is particularly effective when manual focus is used.

As a display method of focus peaking, there is an example in which an area that is in focus is highlighted with a specific color (such as red, blue, or white).

For the focus peaking, in a case in which the focus peaking obstructs the view during a pan/tilt operation, processing is conceivable in which the opacity is temporarily reduced. For example, it is possible to perform an operation in which the peaking display is temporarily lightened during a pan/tilt operation and is returned to the original opacity when the motion of the camera is stopped.

### (5) Zoom Marker

A zoom marker is a marker for indicating a cropping range of a video during a zoom operation. For example, during a digital zoom operation, the zoom marker is used to indicate which region within a screen is to be enlarged.

As the zoom marker, for example, a frame corresponding to a zoom magnification is displayed at the center of the screen. Additionally, when zooming in, the center portion is emphasized.

When panning/tilting and zooming are combined, visibility tends to decrease. Therefore, in a case in which the zoom marker display is unnecessary during zooming, processing is conceivable in which the opacity is temporarily changed.

### [Other embodiments]

Although various embodiments have been described in detail above, the present disclosure is not limited to these specific embodiments, and various forms that do not depart from the gist of the present disclosure are also included in the present disclosure. Parts of the above-described embodiments may be combined as appropriate.
The present disclosure also includes a case in which a software program for realizing the functions of the above-described embodiments is supplied from a recording medium directly or using wired/wireless communication to a system or an apparatus having a computer capable of executing the program, and the program is executed.

Accordingly, the program code itself, which is supplied to and installed in a computer to realize the functional processing of the present disclosure by the computer, also realizes the present disclosure. That is, the computer program itself for realizing the functional processing of the present disclosure is also included in the present disclosure.

In this case, as long as the functions of the program are provided, the form of the program does not matter, such as object code, a program executed by an interpreter, or script data supplied to an OS.

Examples of a recording medium for supplying the program include a magnetic recording medium such as a hard disk or a magnetic tape, an optical/magneto-optical storage medium, and a nonvolatile semiconductor memory.

Additionally, as a method of supplying the program, a method is also conceivable in which a computer program forming the present disclosure is stored in a server on a computer network, and a connected client computer downloads the computer program.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

This application claims the benefit of priority from Japanese Patent Application No. 2025-054710, filed on March 28, 2025, which is hereby incorporated by reference herein in its entirety.

## Claims

1. A display control apparatus (200) comprising:
an acquisition means (21) configured to acquire a video from an imaging apparatus;
a detection means configured to detect any of a pan operation, a tilt operation, and a zoom operation of the imaging apparatus;
a determination means (22) configured to determine an opacity of a marker to be superimposed on the video according to a result of the detection; and
a control means (25) configured to cause a display device to display the marker that is superimposed on the video at the determined opacity.

2. The display control apparatus according to claim 1, wherein an opacity of a marker in a case in which any of a pan operation, a tilt operation, and a zoom operation of the imaging apparatus is detected is equal to or less than an opacity of a marker in a case in which none of the pan operation, the tilt operation, and the zoom operation of the imaging apparatus are detected.

3. The display control apparatus according to claims 1 or 2, wherein the marker is an area marker indicating a specific area of a display screen.

4. The display control apparatus according to claim 3, wherein the area marker is a marker arranged at a peripheral portion of a display region of a display screen.

5. The display control apparatus according to claim 3, wherein the area marker is an aspect marker or a safety zone marker.

6. The display control apparatus according to any one of claims 1 to 5, wherein an opacity of a marker in a case in which none of a pan operation, a tilt operation, and a zoom operation of the imaging apparatus is performed is settable by a user operation.

7. The display control apparatus according to any one of claims 1 to 6, wherein an opacity of the marker in a case in which at least one of a pan operation, a tilt operation, and a zoom operation of the imaging apparatus are performed is settable by a user operation.

8. The display control apparatus according to any one of claims 1 to 7, wherein a display form for each type of a marker is settable by a user operation.

9. The display control apparatus according to any one of claims 1 to 8, wherein
the detection unit detects a speed in a pan direction of the imaging apparatus and a speed in a tilt direction of the imaging apparatus, and
an opacity of the marker is determined further based on either the speed in the pan direction or the speed in the tilt direction.

10. The display control apparatus according to any one of claims 1 to 9, wherein in a case in which an operation in either a pan direction or a tilt direction of the imaging apparatus is detected, an opacity of the marker is determined based on a detected direction and a position of the marker within a display screen.

11. A display control method comprising:
acquiring a video from an imaging apparatus;
detecting any one of a pan operation, a tilt operation, and a zoom operation of the imaging apparatus;
determining an opacity of a marker to be superimposed on the video according to a result of the detection; and
causing a display device to display the marker that is superimposed on the video at the determined opacity.

12. A computer program for executing the display control method according to claim 11.
